# EUROPEAN PATENT SPECIFICATION

(11) **EP 4 551 535 B1**
(45) Date of publication and mention of the grant of the patent: **11.11.2026**
(21) Application number: 23741202.8
(22) Date of filing: 21.06.2023
(51) Int. Cl.: C03B 33/02, B23K 26/364, B23K 26/53, C03B 33/09, B23K 26/00, B23K 26/064, B23K 26/06, B23K 26/402

(54) **METHODS FOR DRILLING IN A SUBSTRATE USING LASER PERFORATION AND LASER ABLATION AND CORRESPONDING PRODUCT**
VERFAHREN ZUM BOHREN IN EINEM SUBSTRAT MITTELS LASERPERFORATION UND LASERABLATION UND DAZU GEHORENDEM SUBSTRAT
PROCÉDÉS DE FORAGE DANS UN SUBSTRAT EN UTILISANT UNE PERFORATION AU LASER ET UNE ABLATION AU LASER ET SUBSTRAT CORRESPONDANT

(30) Priority: 07.07.2022 US 202263358903 P
(43) Date of publication of application: 14.05.2025
(73) Proprietor: Corning Incorporated, Corning, New York 14831 (US)
(72) Inventor: BREITWIESER, Maximilian Joachim Gustav, 82319 Munich, Bavaria (DE); GAAB, Andreas Simon, Corning, New York 14830 (US)
(74) Representative: Dilg, Haeusler, Schindelmann Patentanwaltsgesellschaft mbH
(86) International application number: PCT/US2023/025798
(87) International publication number: WO 2024/010689

(56) References cited:
- US-A1- 2015 165 560
- US-A1- 2018 105 451

## Description

### BACKGROUND

Substrates, such as glass substrates, may be utilized in a wide variety of applications. In some applications, it may be desirable to drill small features into the substrate. Representative features include through holes, blind vias, channels, grooves, slots, depressions, bevels, and chamfers. However, present methods for fabricating such features have disadvantages, such as long process times, low positional accuracy, and rough sidewalls. These disadvantages may be unacceptable when applications demand tight tolerances and high quality features.

Accordingly, alternative methods for fabricating features within substrates may be desired.

US 2018/0105451 A1 relates to creation of holes and slots in glass substrates. Disclosed is a process for cutting and separating interior contours in thin substrates of transparent materials, in particular glass. The method involves the utilization of an ultra-short pulse laser to form perforation or holes in the strengthened (e.g., ion exchanged) glass substrate, that may be followed by use of another, focused, laser beam to promote full separation about the perforated line.

US 2015/0165560 A1 relates to laser processing of slots and holes.

### SUMMARY

The claimed invention is defined by the appended independent claims.

A method for forming features in transparent substrates is described. The method is a hybrid method that combines an initial step of forming a perforation contour and a subsequent step of ablation to remove material from the substrate to form a feature. The features exhibit low sidewall roughness and minimal chipping.

The present invention extends to:
A method of forming a feature in a substrate, the method comprising:
forming a perforation contour comprising a plurality of perforations by directing a pulsed laser beam focal line into the substrate at a plurality of locations, the pulsed laser beam focal line generating an induced absorption within the substrate at each of the locations, the induced absorption producing one of the plurality of perforations; and
directing an ablation laser beam into the substrate along an ablation track offset from the perforation contour, the ablation laser beam ablating the substrate along the ablation track,
characterised in that the ablation track is offset from the perforation contour by a spacing in a range from 5 µm to 25 µm.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the representative embodiments.
FIG. 1 schematically illustrates a top view of an example substrate having an example feature according to one or more embodiments described and illustrated herein;
FIG. 2 schematically illustrates a side view of an example substrate having an example feature according to one or more embodiments described and illustrated herein;
FIG. 3 schematically illustrates a system for forming a perforation contour in a substrate according to one or more embodiments described and illustrated herein;
FIG. 4 schematically illustrates a top view of a perforation contour fabricated in a substrate according to one or more embodiments described and illustrated herein;
FIG. 5 schematically illustrates a partial side view of a perforation contour fabricated in a substrate according to one or more embodiments described and illustrated herein;
FIG. 6 schematically illustrates a system for forming an ablation groove in a substrate according to one or more embodiments described and illustrated herein;
FIG. 7 schematically illustrates an ablation track that is offset from a perforation contour according to one or more embodiments described and illustrated herein;
FIG. 8 schematically illustrates an ablation laser beam spot traversing an ablation track offset from a perforation contour according to one or more embodiments described and illustrated herein;
FIG. 9 graphically illustrates a flowchart of a method for drilling a feature in a substrate according to one or more embodiments described and illustrated herein;
FIG. 10 graphically illustrates a flowchart of a method for drilling a feature in a substrate by processing each side of the substrate according to one or more embodiments described and illustrated herein;
FIGS. 11A-11D schematically and progressively illustrate a substrate being processed by the method of FIG. 9 according to one or more embodiments described and illustrated herein;
FIG. 12A is a digital photograph of a top-down view of a through hole fabricated by a nanosecond ablation method;
FIG. 12B is a digital photograph of a top-down view of a through hole fabricated by a method as illustrated by FIG. 9 according to one or more embodiments described and illustrated herein;
FIG. 13A is a digital photograph of a cross-sectional view of a through hole fabricated by a method as illustrated by FIG. 9 with an unoptimized perforation-ablation offset;
FIG. 13B is a digital photograph of a cross-sectional view of a through hole fabricated by a method as illustrated by FIG. 9 with an optimized perforation-ablation offset;
FIG. 14A is a digital photograph of a top-down view of a square feature fabricated by a nanosecond ablation method; and
FIG. 14B is a digital photograph of a top-down view of a square feature fabricated by a method as illustrated by FIG. 9 according to one or more embodiments described and illustrated herein.

### DETAILED DESCRIPTION

Embodiments described herein relate to laser drilling through-features in substrates, such as glass substrates. The methods described herein may be utilized in applications where features with precise position, precise shape, small dimensions (e.g., diameters, widths, and/or lengths of less than 10 mm) with smooth sidewalls are desired. However, traditional methods of fabricating features are either too slow (and therefore costly), are not precise (e.g., positional accuracy greater than ±10 µm), produce low-quality edges (e.g., high surface roughness, cracking, or excessive chipping), or combinations thereof.

For example, a laser-based ablation method uses a 532 nm nanosecond laser to laser-drill a through hole. The typical hole diameters for this method range from 0.2 mm to 10 mm. However, although this laser-based ablation approach can create small holes in a short amount of time, this approach may result in holes with high surface roughness that may not be acceptable in demanding applications.

Another approach is a laser-based ablation method that uses a 532 nm picosecond laser to create small through-features (e.g., diameters in the range of 0.1 mm to 1 mm) having smooth sidewalls that cannot be achieved by the nanosecond laser-based ablation approach. However, the processing times for this approach are much longer than the nanosecond laser-based ablation approach, and result in tapered sidewalls that also may be undesirable in some applications.

Yet another approach is based on an initial laser-based modification of the substrate followed by an etching step. A laser beam (e.g., a nanosecond UV laser or a laser beam configured to induce non-linear absorption or a Kerr effect in the substrate) is used to create damage regions in or through the substrate. The damage regions are positioned along a pathway of the substrate to weaken the substrate along the pathway. A subsequent etching step is used to expand the damage regions to the desired diameter. Because the substrate is weakened along the damage pathway, etching occurs preferentially along the damage pathway to enable formation of a feature. However, this approach has long process times and results in tapered sidewalls.

Embodiments of the present disclosure address these problems through a hybrid approach that includes formation of damage regions through non-linear effects induced by a laser and ablation. In a first step, a perforation contour is formed in the substrate. The perforation contour consists of a plurality of damage regions formed through non-linear interaction of a laser beam with the substrate. The perforation contour defines a shape, perimeter, or outline of the feature. Configuration of a pulsed laser beam to induce non-linear absorption through formation of a laser beam focal line is a preferred non-linear interaction. A minimal amount of substrate material is removed during this step. The substrate with a perforation contour is ablated in a second step. Ablation is accomplished by directing a pulsed ablation laser beam along an ablation track. The ablation track is offset from the perforation contour. The ablation laser beam removes substrate material to complete formation of the feature. Formation of the perforation contour preconditions the substrate to facilitate removal of material by ablation to provides features having high positional accuracy (e.g., within 5 to 10 µm), small dimensions (e.g., as small as 0.5 mm) and smooth sidewalls (e.g., a surface roughness Ra less than 3 µm). In some embodiments, the sidewalls of the features are substantially straight and not tapered. Additionally, the processing times needed to form the features are short and enable high-throughput processing of substrates with demanding feature requirements.

Features may extend through the full thickness of the substrate or less than the full thickness of the substrate. Features that extend through the full thickness of the substrate are referred to herein as "through features" (e.g. through hole). Features that extend through less than the full thickness of the substrate are referred to herein as "blind features" (e.g. blind via). As used herein, "formation", "forming" and the like when used in reference to a feature refers to a laser process for removing material from the substrate to create the feature. Representative laser processes include drilling and micromachining.

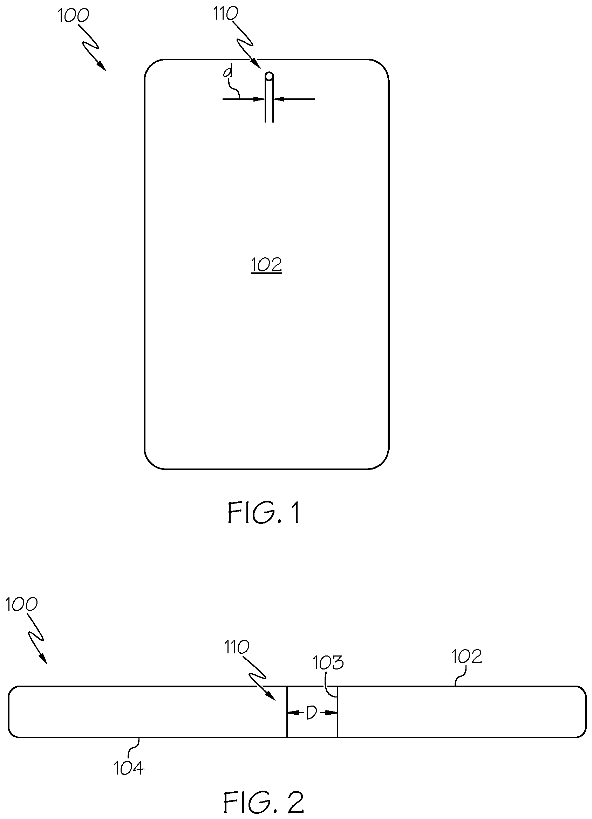

Referring now to FIGS. 1 and 2, an example substrate 100 (e.g., a glass substrate, such as, without limitation, silicate glass, borosilicate glass, alkali-aluminosilicate glass, alkaline earth aluminosilicate glass, boro-aluminosilicate glass, alkaline earth boro-aluminosilicate glass, fused silica, soda-lime glass or crystalline materials, such as sapphire, silicon, gallium arsenide, or combinations thereof) having a first surface 102 and a second surface 104 is schematically illustrated. The thickness of the substrate 100 is in a range from 0.4 mm to 10.0 mm, or in a range from 0.5 mm to 5.0 mm, or in a range from 0.7 mm to 4.0 mm, or in a range from 0.9 mm to 3.5 mm. As an example and not a limitation, the substrate 100 may be a cover for an electronic device. It may be desirable to fabricate a feature 110 through, within, or on the substrate 100. The feature is a region of substrate 100 from which material has been removed. Representative features include through holes, blind vias, channels, grooves, slots, depressions, bevels, and chamfers. In one embodiment, the feature is an opening that extends fully through the thickness of the substrate 100 (e.g. a through hole). In other embodiments, the feature extends for less than the full thickness of the substrate 100 (e.g. blind via). Cross-sectional shapes for the perimeter of the feature include circular, elliptical, rectangular, triangular, and curved shapes. The -illustrative feature 110 of FIG. 1 is a through hole with a perimeter defining a circular cross-section having a diameter d. The methods of the present disclosure enable the formation of small features in the substrate 100, such as, without limitation, holes (or other shapes) having a diameter d (or a width w, length l, or other characteristic feature size) as small as 0.5 mm (e.g. 0.5 mm to several mm to tens of mm) with a positional accuracy of 5-10 µm (i.e., formation of a feature within ±5-10 µm of an intended position).

In embodiments, features formed by the hybrid method disclosed herein have a feature size greater than 0.5 mm, or greater than 1.0 mm, or greater than 3.0 mm, or greater than 5.0 mm, or greater than 10.0 mm, or greater than 25.0 mm, or less than 25.0 mm, or less than 20.0 mm, or less than 15.0 mm, or less than 10.0 mm, or less than 5.0 mm, or less than 3.0 mm, or less than 1.0 mm, or in a range from 0.5 mm to 100.0 mm, or in a range from 0.5 mm to 50.0 mm, or in a range from 0.5 mm to 25.0 mm, or in a range from 0.5 mm to 15.0 mm, or in a range from 0.5 mm to 5.0 mm, or in a range from 1.0 mm to 20.0 mm, or in a range from 1.0 mm to 10.0 mm, or in a range from 1.0 mm to 5.0 mm.

It is noted that the features described herein may be closed features on or within the substrate 100 as well as open features, such as a notch or a chamfer extending to or from one or more edges of the substrate 100.

In embodiments of the disclosure, a perforation contour outlining a perimeter of the feature 110 is first formed at least partially through the thickness of the substrate 100. The perforation contour, which is described in more detail below, comprises a plurality of damage regions (referred to herein as "perforations") extending at least partially through the thickness of the substrate 100. The perforation contour is created by a pulsed laser beam focal line that is directed to the substrate 100. The pulsed laser beam focal line is positioned to extend at least through a portion of the thickness of the substrate 100. In some embodiments, the pulsed laser beam focal line is oriented orthogonal for first surface 102 or second surface 104. In other embodiments, the pulsed laser beam focal line is oriented at an angle to first surface 102 or second surface 104. The pulsed laser beam focal line and/or the substrate is translated to form the sequence of damage regions (perforations) that define the perforation contour.

In accordance with methods described below, a laser can be used to create highly controlled perforations through a substrate, with extremely little (<75 µm, often <50 µm) subsurface damage, no or negligible material removal, and no or negligible debris generation. As used herein, a "perforation" refers to a region of a substrate that has been structurally modified by a laser beam. For purposes of the present disclosure, structural modification means that the substrate has been weakened mechanically (and thus "damaged") by the laser beam. Typical structural modifications include compaction (densification) and cleaving of chemical bonds. In addition to differing in mechanical strength from surrounding unmodified portions of the substrate, perforations may also differ in other properties (e.g. refractive index or density). Representative characteristics of perforations include cracks, scratches, flaws, holes, or other deformities in the substrate produced by a laser beam focal line. Formation of perforations is accompanied by little or no removal of material from the substrate. Instead, the perforations remain substantially occupied by structurally modified substrate material. Perforations may also be referred to, in various embodiments herein, as defects, defect lines or damage regions.

The laser pulses that form the perforations can be emitted at rates of several hundred kilohertz (several hundred thousand perforations per second, for example) using a pulsed laser beam. Thus, with relative motion between the source and the material the perforations can be placed adjacent to one another by selecting or triggering the required laser pulses (spatial separation varying from sub-micron to tens of microns as desired, such as a spacing between perforations of 0.1 µm to 30 µm, or 2.0 µm to 20 µm, or 4.0 µm to 15 µm, or 5.0 µm to 12 µm). This spatial separation is selected in order to optimize processing speed and to facilitate feature formation. As a non-limiting example, in the embodiments described herein the diameter of the perforations is <500 nm, for example ≤400 nm, or ≤300 nm, or in a range from 50 nm to 500 nm, or in a range from 100 nm to 400 nm, or in a range from 150 nm to 300 nm.

The wavelength of the laser is selected so that the substrate modified by the pulsed laser beam focal line is transparent to the laser wavelength. A substrate is transparent to the laser wavelength if it absorbs less than 10% of the intensity of the laser wavelength per mm of thickness of the substrate. In embodiments, the substrate absorbs less than 5%, or less than 2%, or less than 1% of the intensity of the laser wavelength per mm of thickness of the substrate.

The selection of the laser source is further predicated on the ability to induce multi-photon absorption (MPA) in the transparent material. MPA is a non-linear optical effect in the transparent substrate that involves the simultaneous absorption of multiple photons (e.g. two, three, four or more) of identical or different frequencies in order to excite the substrate from a lower energy state (usually the ground state) to a higher energy state (excited state). The excited state may be an excited electronic state or an ionized state. The energy difference between the higher and lower energy states of the material is equal to the sum of the energies of the two or more photons. MPA is a nonlinear process that is several orders of magnitude weaker than linear absorption. In the case of two-photon absorption, it differs from linear absorption in that the strength of absorption depends on the square of the light intensity, thus making it a nonlinear optical process. At ordinary light intensities, MPA is negligible. If the light intensity (energy density) is extremely high, such as in the region of focus of a laser source (particularly a pulsed laser source), MPA becomes appreciable and leads to measurable effects in the material within the region where the energy density of the light source is sufficiently high (i.e. above the non-linear threshold). Within the focal region, the energy density may be sufficiently high to result in structural modification of the substrate through, for example, ionization, breaking of molecular bonds, and vaporization of material.

At the atomic level, the ionization of individual atoms has discrete energy requirements. Several elements commonly used in glass (e.g., Si, Na, K) have relatively low ionization energies (~5 eV). Without the phenomenon of MPA, a wavelength of about 248 nm would be required to create linear ionization at ~5 eV. With MPA, ionization or excitation between states separated in energy by ~5 eV can be accomplished with wavelengths longer than 248 nm. For example, photons with a wavelength of 1064 nm have an energy of ~1.165 eV, so two photons with wavelength 1064 nm can induce a transition between states separated in energy by ~2.33 eV in two-photon absorption (TPA), for example.

Thus, atoms and bonds can be selectively excited or ionized in the regions of a transparent material where the energy density of the laser beam is sufficiently high to induce nonlinear TPA of a laser wavelength having half the required excitation energy, for example. MPA can result in a local reconfiguration and separation of the excited atoms or bonds from adjacent atoms or bonds. The resulting modification in the bonding or configuration constitutes a structural modification corresponding to formation of a perforation. The structural modification associated with perforations mechanically weakens the transparent material and renders it more susceptible to cracking, fracturing, or material removal by ablation.

Perforations can be formed by operating a pulsed laser in burst mode. In burst mode, the pulsed laser emits a series of burst pulses at a high repetition rate. Perforations can be formed with one or more burst pulses. Each burst pulse constitutes an envelope of high energy, short duration sub-pulses spaced close together in time. The laser pulse duration, defined as the separation in time between consecutive burst pulses, may be 10⁻¹⁰ s or less, or 10⁻¹¹ s or less, or 10⁻¹² s or less, or 10⁻¹³ s or less. The separation in time of sub-pulses within a burst is much smaller than the laser pulse duration. The repetition rate of the burst pulses is in a range from about 1 kHz to 4 MHz, such as in a range from about 10 kHz to about 3 MHz, or from about 10 kHz to about 650 kHz). The perforations of a perforation contour may be spaced apart and precisely positioned by controlling the velocity of a substrate relative to the laser through control of the motion of the laser and/or the substrate. As an example, in a substrate moving at 200 mm/sec exposed to a 100 kHz series of burst pulses, the individual burst pulses would be spaced 2 microns apart and would create a perforation contour with a series of perforations separated by 2 µm. In some embodiments, the substrate is positioned on a translation table (not shown) capable of being translated along at least one axis. Any translation table or other device capable of translating either the glass substrate or the optical delivery head may be utilized.

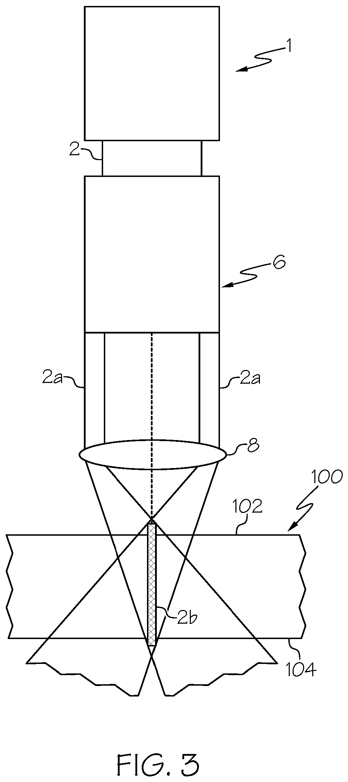

Turning now to FIG. 3, a non-limiting example laser system 105 for forming a perforation contour in a substrate is depicted. Laser systems capable of forming perforations are known in the art; see, for example, U.S. Pat. No. 10,421 683. A representative summary of a suitable laser system follows. Laser system 105 includes a laser source 1 and an optical system 6 for converting a pulsed laser beam 2 into a laser beam focal line 2b aligned along the beam propagation direction (z-direction). Laser beam focal line 2b is a region of high energy density that forms a perforation in substrate 100. The intensity within laser beam focal line 2b is sufficient to induce non-linear absorption in the substrate 100. As shown in FIG. 2, laser 1 emits laser beam 2, which is directed to optical system 6. Laser beam 2 has a Gaussian intensity profile. The optical system 6 transforms laser beam 2 into laser beam focal line 2b positioned at a location in or on substrate 100 and extending for a length therein. In one embodiment, optical system 6 transforms laser beam 2 into a Bessel beam or a Gauss-Bessel beam (e.g. using an axicon, diffractive optical element, phase mask) and optical system 6 further includes optics (telescope, focusing lens, aperture, beam block) for forming laser beam focal line 2b from the Bessel beam or Gauss-Bessel beam. In the embodiment of FIG. 3, optical system 6 produces an annular beam 2a (ring-shaped illumination) that is directed to focusing lens 8 to form laser beam focal line 2b in substrate 100. Focusing lens 8 can be within optical system 6 or external to optical system 6. The laser beam focal line 2b may have a length in a range of from about 0.1 mm to about 100 mm or in a range of from about 0.1 mm to about 10 mm. Various embodiments may be configured to have a laser beam focal line 2b with a length 1 of about 0.1 mm, about 0.2 mm, about 0.3 mm, about 0.4 mm, about 0.5 mm, about 0.7 mm, about 1 mm, about 2 mm, about 3 mm, about 4 mm, or about 5 mm e.g., from about 0.5 mm to about 5 mm.

The laser beam focal lines 2b described herein may be formed using a quasi-non-diffracting beam (e.g. Bessel beam, Gauss-Bessel beam, Airy beam). As used herein, the term "quasi-non-diffracting beam" is used to describe a laser beam having low beam divergence (large Rayleigh range). The laser beam 2a has an intensity distribution I(X,Y,Z), where Z is the beam propagation direction of the laser beam, and X and Y are directions orthogonal to the beam propagation direction. The X-direction and Y-direction may also be referred to as cross-sectional directions and the X-Y plane may be referred to as a cross-sectional plane. The coordinates and directions X, Y, and Z are also referred to herein as x, y, and z; respectively. The intensity distribution of the laser beam 2a in a cross-sectional plane may be referred to as a cross-sectional intensity distribution.

The quasi-non-diffracting laser beam may be formed by impinging a diffracting laser beam (such as a Gaussian beam) into, onto, and/or thorough a phase-altering optical element of an optical system 6, such as an adaptive phase-altering optical element (e.g., a spatial light modulator, an adaptive phase plate, a deformable mirror, or the like), a static phase-altering optical element (e.g., a static phase plate, an aspheric optical element, such as an axicon, or the like), to modify the phase of the beam, to reduce beam divergence, and to increase Rayleigh range. Example quasi-non-diffracting beams include Gauss- Bessel beams, Airy beams, Weber beams, and Bessel beams.

Without intending to be limited by theory, beam divergence refers to the rate of enlargement of the beam cross section in the direction of beam propagation (i.e., the Z direction). Laser beams for forming the perforations of the perforation contours described herein are formed from laser beam focal lines 2b as stated above. Laser beam focal lines 2b have low divergence and weak diffraction. The divergence of the laser beam is characterized by the Rayleigh range Z_{R}, which is related to the variance σ² of the intensify distribution and beam propagation factor M² of the laser beam. Additional information on the formation of laser beam focal lines 2b using quasi-non-diffracting laser beams for forming perforation contours can be found in U.S. Pat. Publ. Nos. 2018/0221988 or 2020/0361037. A summary of Rayleigh range Z_{R} and quasi-non-diffracting beams follows.

The Rayleigh range of a laser beam is the distance over which the spot size w of the laser beam increase by a factor of $\sqrt{2}$ relative to the minimum spot size w₀. The spot size of the laser beam corresponds to the distance from the position of the peak intensity of the laser beam (typically defined to be the center of the beam (r = 0)) to the position (r > 0) at which the intensity of the laser beam has decreased to 1/e² of the peak intensity. The minimum spot size w₀ of a laser beam is corresponds to the beam waist (see ISO 11146-1:2005(E)). in a material of refractive index n₀ at wavelength λ₀. A criterion for quasi-non-diffracting beams based on Rayleigh range Z_{R} can be defined. the spot size *wₒ*. can be defined More particularly, a quasi-non-diffracting laser beam is a laser beam that satisfies the condition set forth in Eq. (1): ${Z}_{R} > {F}_{D} \frac{{πnw}_{0}^{2}}{λ}$ Eq. (1) where w₀ is the spot size of the laser beam at the beam waist, λ is the wavelength of the laser beam, n is the refractive index of the medium in which the laser beam propagates, and *F_{D}* is a dimensionless divergence factor having a value of at least 10, at least 50, at least 100, at least 250, at least 500, at least 1000, in the range from 10 to 2000, in the range from 50 to 1500, in the range from 100 to 1000. For purposes of comparison, the dimensionless divergence factor F_{D} has a value of 1 for a Gaussian beam and the Rayleigh range Z_{R} for a Gaussian beam is derived from Eq. (1) by setting F_{D} to 1 and replacing the inequality (">") with equality ("="). The dimensionless divergence factor *F_{D}* provides a criterion for determining whether or not a laser beam is quasi-non-diffracting. As used herein, a laser beam is considered quasi-non-diffracting if the characteristics of the laser beam satisfy Eq. (1) with a value of *F_{D}* ≥ 10. As the value of *F_{D}* increases, the laser beam approaches a more nearly perfectly non-diffracting state. In the method described herein, the laser beam focal line used to form the perforations of the perforation contour is formed from a quasi-non-diffracting beam. Preferably, the quasi-non-diffracting beam is a Bessel beam or a Gauss-Bessel beam.

Referring once again to FIG. 3, a substrate 100 (e.g., glass) in which internal modifications by laser processing and multi-photon absorption is to occur is schematically illustrated. The substrate 100 may be disposed on a carrier. The substrate 100 may be positioned on a translation table (not shown) configured to move along at least one axis. The translation table may be controlled by one or more controllers (not shown), for example. The substrate 100 is positioned in the beam path so that laser beam focal line 2b forms in a least a portion of the thickness of substrate 100. The laser beam 2 may be generated by the laser source 1, which may be controlled by one or more controllers (not shown), for example. The substrate 100 is illustrated with first surface 102 facing (closest or proximate to) the optical system 6 or the laser, respectively, and the second surface 104 is the opposite surface of the substrate 100 (the surface remote, or further away from, optical system 6 or the laser).

As FIG. 3 depicts, the substrate 100 is aligned perpendicular to the longitudinal beam axis and intersects the laser beam focal line 2b produced by the optical system 6 (the substrate is perpendicular to the plane of the drawing). Viewed along the beam direction, the substrate 100 is positioned relative to the laser beam focal line 2b in such a way that the laser beam focal line 2b (viewed in the direction of the beam) starts at the first surface 102 of the substrate 100 and extends to the second surface 104 of the substrate 100. In another example, the focal line 2b may terminate within the substrate 100 and not extend over the full thickness of the substrate 100. In the overlapping area of the laser beam focal line 2b with substrate 100, i.e. in the portion of substrate 100 overlapped by laser beam focal line 2b, the laser beam focal line 2b has intensity sufficient to induce nonlinear absorption in substrate 100. The induced nonlinear absorption results in formation of a perforation in substrate 100 along the laser beam focal line 2b.

As FIG. 3 shows, the substrate 100 (which is transparent to the wavelength λ of laser beam 2) is modified due to the induced absorption along the focal line 2b. The induced absorption arises from the nonlinear effects associated with the high intensity (energy density) of the laser beam within focal line 2b. The energy required to modify the substrate is the pulse energy, which may be described in terms of burst pulse energy (i.e., the energy contained within a pulse burst where each burst pulse contains a series of sub-pulses as noted above)). As non-limiting examples, the burst pulse energy may be in a range of 25 µJ to 1000 µJ, e.g., from about 25 µJ to about 750 µJ, from about 50 µJ to about 500 µJ , or from about 50 µJ to about 250 µJ. However, for some glass compositions, such as display or TFT glass compositions, the pulse energy may be higher (e.g., from about 300 µJ to about 500 µJ, or from about 400 µJ to about 600 µJ, depending on the specific glass composition of the substrate 100).

The laser beam 2a may be a pulsed laser beam, such as a picosecond pulsed laser beam. In some embodiments, the picosecond laser creates a burst pulse consisting of a plurality of sub-pulses. Each burst pulse contains multiple sub-pulses (such as at least 2 sub-pulses, at least 3 sub-pulses, at least 4 sub-pulses, at least 5 sub-pulses, at least 10 sub-pulses, at least 15 sub-pulses, at least 20 sub-pulses, or more) of very short duration (e.g., in a range of from about 1 femtosecond to about 200 picoseconds, such as from about 1 picosecond to about 100 picoseconds, 5 picoseconds to about 20 picoseconds, or the like). That is, a burst pulse is a packet of sub-pulses, and the burst pulses are separated from one another by a longer separation duration than the separation of individual adjacent pulses within each burst. The duration between sub-pulses within a burst pulse may be in a range from about 1 ns to about 50 ns, for example, from about 10 ns to about 30 ns, such as about 20 ns. In other embodiments, sub-pulses within the burst pulse may be separated by a duration of up to 100 picoseconds (e.g., 0.1 picoseconds, 5 picoseconds, 10 picosecond, 15 picoseconds, 18 picoseconds, 20 picoseconds, 22 picoseconds, 25 picoseconds, 30 picoseconds, 50 picoseconds, 75 picoseconds, or any range therebetween). The separation duration between burst pulses may be from about 0.25 ms to about 1000 ms, e.g., from about 1 ms to about 10 ms, or from about 3 ms to about 8 ms.

In other embodiments of the present disclosure, non-linear absorption is induced in a transparent laser using a tightly focused Gaussian laser beams. A tightly focused Gaussian laser beam has intensity to induce absorption through the Kerr effect and the Kerr effect can be used to form perforations through a filamentation process.

During filamentation, non-linear effects such as Kerr self-focusing and plasma formation can extend the focal region of a tight Gaussian focus to >100 µm to enable formation of perforations having an extended length. The central lobe of the filament can be quite small and thus produce a high-intensity beam capable of inducing non-linear effects. To further elongate the beam, a lens with multiple foci at various depths or multiple laser passes with varying focal depths may be used.

In general, the optical method of forming the laser focus can take multiple forms, such as, without limitation, spherical lenses, diffractive elements, or other methods to form the linear region of high intensity. The type of laser (picosecond, femtosecond, and the like) and wavelength (IR, visible, UV, and the like) may also be varied, as long as sufficient optical intensities are reached to create breakdown of the substrate material. As non-limiting examples, the wavelength may be 515 nm, 532 nm, 800 nm, 1030 nm, or 1064 nm.

It is noted that any laser process capable of creating the perforations may be utilized.

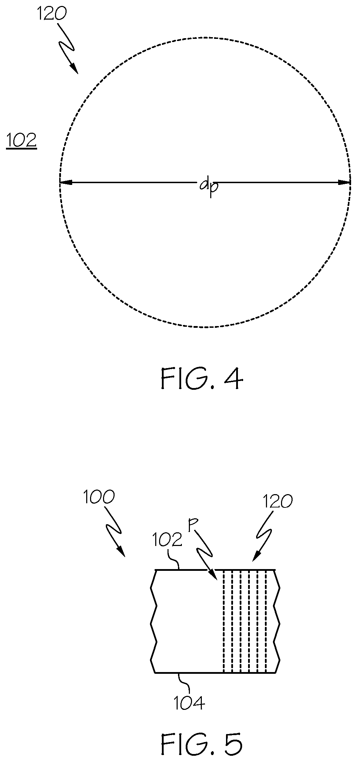

Referring now to FIG. 4, an example perforation contour 120 configured as a circle is shown. FIG. 4 is a top-down view of the first surface 102 of a substrate 100 The circle defined by the perforation contour 120 has a diameter d_{P}. FIG. 5 is a partial side view of the substrate 100 having individual spaced-apart perforations P that define the perforation contour 120. The perforations P may generally be spaced apart from one another by a distance along the perforation contour 120 of from about 0.1 µm to about 500 µm, for example, about 1 µm to about 200 µm, about 2 µm to about 100 µm, about 5 µm to about 20 µm, or the like. For example, suitable spacing between the perforations P may be from about 0.1 µm to about 50 µm, such as from about 5 µm to about 15 µm, from about 5 µm to about 12 µm, from about 7 µm to about 15 µm, or from about 7 µm to about 12 µm. In some embodiments, a spacing between adjacent perforations P may be about 50 µm or less, 45 µm or less, 40 µm or less, 35 µm or less, 30 µm or less, 25 µm or less, 20 µm or less, 15 µm or less, 10 µm or less, or the like.

As shown in FIG. 5, the perforations P may extend fully through the thickness of the substrate 100.

Embodiments are not limited by the material of the substrate 100. Non-limiting examples of materials for the substrate include glass, glass-ceramic, and silicon.

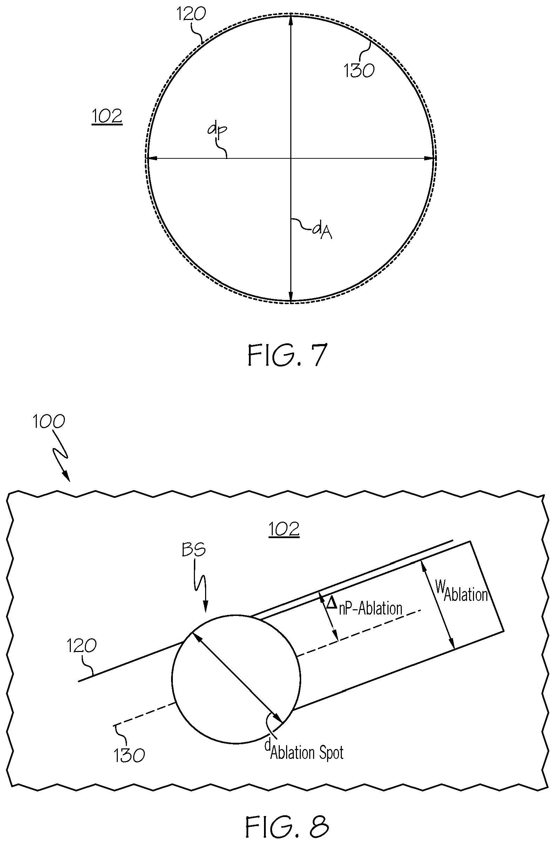

Following the formation of perforation contour 120 to define the shape of the feature 110, an ablation laser is used to ablate the substrate material to form the feature 110. The ablation laser is directed along an ablation track that is offset from perforation contour 120 by a perforation-ablation offset Δ_{nP-Ablation} (FIG. 7). The ablation laser beam removes substrate material along the ablation track by ablation to form an ablation groove. The ablation track preferably has the same cross-sectional shape as the perforation contour and, in embodiments in which the perforation contour is closed, is positioned within the perforation contour and spaced apart from the perforation contour by the perforation-ablation offset Δ_{nP-Ablation}. Upon completion (or during formation) of the ablation groove, the substrate fractures along the ablation track and the portion of the substrate circumscribed by the perforation contour drops out or separates from the substrate to form the feature. As described in more detail below, the perforation-ablation offset Δ_{np-Ablation} is such that a surface of a sidewall of the feature has reduced surface roughness Ra as compared to previous laser-based approaches for forming features. For example and without limitation, the feature may have a surface roughness Ra of less than or equal to 5 µm, or less than or equal to 4 µm, or less than or equal to 3 µm for the sidewall. For purposes of the present disclosure, the surface roughness Ra refers to "roughness average" as defined by ASME B46.1 and corresponds to the average of absolute values of surface profile height deviations from the mean value.

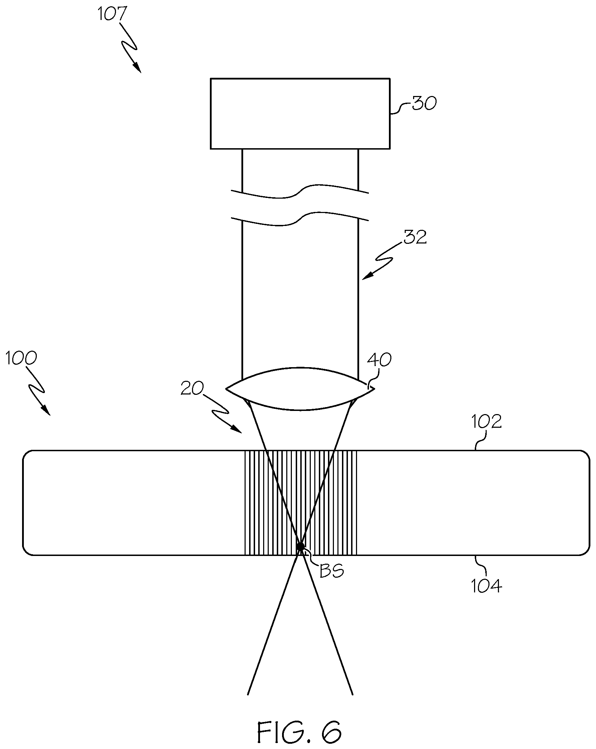

Referring now to FIG. 6, a laser system 107 for ablating the substrate 100 at ablation location 20 along an ablation track is schematically illustrated. The laser system 107 includes an ablation laser 30 and one or more focusing lenses 40. The ablation laser 30 produces an ablation laser beam 32 (typically with a Gaussian intensity profile) that is initially focused to a beam spot BS (defined as the waist of the focused ablation laser beam 32) positioned proximate to a surface of the substrate 100 that is opposite the surface of incidence of the ablation laser beam 32. In the illustrated example of FIG. 6, the incident surface of the substrate 100 is the first surface 102 and the opposite surface is the second surface 104. As used herein, "proximate to a surface" means that the distance between the beam spot BS and the surface is less than or equal to the Rayleigh range of ablation laser beam 32. In the illustrated example of FIG. 6, beam spot BS is positioned such that the Rayleigh range of ablation laser beam 32 extends from beam spot BS to or beyond second surface 104. In embodiments, the beam spot BS of the ablation laser beam 32 is positioned within a distance of less than 50%, or less than 30% or less than 20% or less than 10% of the thickness of the substrate from the opposite surface. The ablation laser is traversed along the ablation track to initiate ablation. Depending on the thickness of the substrate, the ablation laser beam may be traversed multiple times along the ablation track to remove material. The position of beam spot BS may be adjusted with each traversal to control the location of ablation and to ensure removal of material through the full thickness of the substrate. Shadowing is prevented by initially positioning the beam spot BS proximate to the surface opposite the surface of incidence of the substrate 100 and progressively moving the position of the beam spot BS closer to the surface of incidence with each traversal of the ablation laser beam along the ablation track.

The focus and intensity of the ablation laser beam 32 are such that substrate material is removed by ablation along the ablation track to form one or more ablation grooves. The wavelength of the ablation laser beam 32 may be less than 2000 nm, or less than 1500 nm, or less than 1200 nm, or in a range from 300 nm - 1100 nm, (e.g., a Nd:YAG laser (1064 nm) or harmonics thereof (532 nm, 355 nm, 266 nm)), or in a range from 400 nm - 1000 nm, or in a range from 500 nm - 900 nm. The wavelength of the ablation laser beam 32 may be the same as or different from the wavelength of laser beam 2 that is used to form the perforations of the perforation contour. A repetition rate of the ablation laser may be greater than or equal to 10 kHz, the power of the ablation laser may be in a range from 5 W-50 W and the translation speed of the ablation laser beam relative to the substrate may be in a range from 0.5 to 10 m/s. The one or more focusing lenses 40 (e.g., having a focal length f between 50 mm and 300 mm) may focus the ablation laser beam 32 to a beam spot BS having a diameter of 10-50 µm.

The ablation laser 30 and/or the substrate 100 are translated relative to each other such that the ablation laser beam 32 is traversed multiple times (e.g., 10-30 times depending on substrate material and thickness) along the ablation track. With each traversal, the position of the beam spot BS may be adjusted closer to first surface 102 in a direction normal to the first surface 102. In some embodiments, the positioning of the beam spot BS in a traversal is positioned directly above (in a direction normal to the first surface 102) the position of the beam spot BS in the immediately preceding traversal. In other embodiments, the positioning of the beam spot BS in a traversal is positioned laterally offset (relative to a direction normal to the first surface 102) from the position of the beam spot BS in the immediately preceding traversal. Various placement patterns of beam spot BS relative to the direction normal to the first surface 102 are envisioned for a series of traversals of ablation laser beam 32 along the ablation track. Examples include spiral patterns or concentric shapes within the perforation contour.

FIG. 7 illustrates the positioning of ablation track 130 relative to perforation contour 120. Perforation contour 120 is closed and ablation track 130 is positioned within and in close proximity to perforation contour 120. Ablation contour 130 is offset from the perforation contour 120 by a perforation-ablation offset Δ_{nP-Ablation}. In the example of FIG. 7, the perforation contour 120 defines a circle having a diameter d_{P} and the ablation track 130 defines an inset circle having a diameter d_{A} such that d_{P} > d_{A}.

An appropriately selected perforation-ablation offset Δ_{nP-Ablation} reduces the roughness of the sidewall of the feature and reduces chipping. Particularly, an appropriately selected perforation-ablation offset Δ_{nP-Ablation} may result in a side wall roughness Ra of less than or equal to 3 µm and/or chipping with chip size less than 50 µm. As defined herein, a "chip" is a defect wherein substrate material is removed from the sidewall of the feature and the size of a chip is the longest linear distance, as measured in the plane of the sidewall, connecting two points on the perimeter of the chip in the plane of the sidewall. The size of a chip may be measured using optical microscopy. In embodiments, a sidewall of a feature formed by the hybrid method described herein has an average chip size of less than 100 µm, or less than 75 µm, or less than 50 µm, or in a range from 5 µm to 100 µm, or in a range from 20 µm to 90 µm, or in a range from 40 µm to 80 µm. In embodiments, a sidewall of a feature formed by the hybrid method described herein lacks chips having a size greater than 50 µm, or greater than 75 µm, or greater than 100 µm.

It is noted that ablation processes in the absence of a perforation contour typically result in a sidewall roughness Ra greater than 5 µm and chips with sizes up to 100 µm. Furthermore, the placement of the ablation laser beam at points along the ablation track in a given traversal and between different traversals is typically only accurate to within about 25-50 µm range This leads to variability in the dimensions of features formed in the conventional ablation process and contributes to sidewall roughness. The positional accuracy of forming perforations (through focal lines or filamentation) is much improved, typically in the 5-10 µm range. Since the ablation track is offset from the perforation contour in the methods described herein, positional variability in the ablation step of the processes described herein has little effect on feature dimensions. The methods described herein provide features with precise boundaries, smooth sidewalls, and low chipping and are able to do so at high process speed.

Referring now to FIG. 8, a beam spot BS of the ablation laser beam 32 is illustrated traversing an ablation track 130 that is offset from a previously formed perforation contour 120. The edge quality of the sidewall of the feature (e.g., the roughness and presence of chipping) is influenced by the diameter d_{P} of the circle defined by the perforation contour 120 relative to the diameter d_{A} of the circle defined by the ablation contour 130. Increasing the diameter d_{A} relative to the diameter d_{P} decreases the perforation-ablation offset Δ_{nP-Ablation} and may result in more chipping at the sidewall of the feature. On the other hand, if the diameter d_{A} is decreased too much relative to the diameter d_{P}, the perforation-ablation offset Δ_{nP-Ablation} increases and the ablation track will be too far removed from the perforation contour to enable precise separation of substrate material at the perforation contour. Instead, excess material will remain on the sidewall of the feature. The perforation-ablation offset Δ_{nP-Ablation} can be adjusted and optimized to minimize the effects of ablation on the sidewall of the feature while enabling precise removal of substrate material at the perforation contour.

FIG. 8 illustrates passage of a center of the beam spot BS of the ablation laser beam 32 over the ablation track 130 to ablate material of the substrate 100 to form ablation groove 132. The beam spot BS has a diameter d_{Ablation Spot} that forms an ablation groove 132 having a **width** w_{Ablation}**.** The ablation track 130 is offset from the previously formed perforation contour 120 by a perforation-ablation offset Δ_{nP-Ablation} (defined as the average over all perforations of the perforation contour 120 as the distance between the perforation and the center of the beam spot BS at the point of closest approach of the beam spot BS to the perforation). The distance of the perforation contour 120 to the ablation track 130 (corresponding to the path traversed by the center of the beam spot BS of the ablation laser beam) should be about half the width w_{Ablation} of the ablated material, which is proportional to the spot size of the beam spot BS created by the ablation laser and the ratio of fluence E(b) of the ablation beam and the ablation threshold fluence E_{threshold} of the substrate 100. The condition required for ablation is E(b) > E_{threshold}. To achieve low surface roughness Ra of the feature sidewall (e.g. Ra < 3 µm), the optimal perforation-ablation offset Δ_{nP-Ablation} is estimated by: ${Δ}_{nP - Ablation} \approx 0.5 ∗ {W}_{Ablation} ∼ {d}_{Ablation Spot} ∗ E \left(b\right) ∗ {{E}_{threshold}}^{- 1} ,$ Eq. (2) where:
*d*_{*Ablation* Spot} is a spot size (defined as the waist diameter of beam spot BS) of the focused ablation laser beam,
*Δ_{P-Ablation}* is the perforation-ablation offset,
w_{Ablation} is a width of the ablation groove,
*E(b)* is a fluence of a beam spot of the focused ablation laser, and
*E_{threshold}* is a threshold fluence of the substrate.

In embodiments, the diameter d_{Ablation spot} of the ablation laser beam is in a range from 10 µm to 50 µm, or in a range from 15 µm to 45 µm, or in a range from 20 µm to 40 µm, and the width w_{Ablation} is in a range from 10 µm to less than 50 µm, or in a range from 15 µm to 45 µm, or in a range from 20 µm to 40 µm. In one embodiment, the beam spot BS of the ablation laser beam is positioned such that the diameter d_{Ablation Spot} overlaps perforation contour 120 and the width w_{Ablation} of the ablation groove does not overlap perforation contour 120. According to the invention, the ablation track is offset from the perforation contour by spacing in a range from 5 µm to 25 µm, or a spacing in a range from 8 µm to 22 µm, or in a range from 10 µm to 20 µm. In embodiments, the ablation laser beam forms an ablation groove without ablating the sidewall of the feature.

The edge quality (wall smoothness and low chipping) that can be achieved with the hybrid process is comparable to the edge quality of the perforation process itself. For an optimized perforation-ablation offset Δ_{nP-Ablation}, the ablation step only removes material and does not change the properties of the edges (walls). Thus with a combination of perforation contour and ablation, the edge quality is determined by the perforation formation step

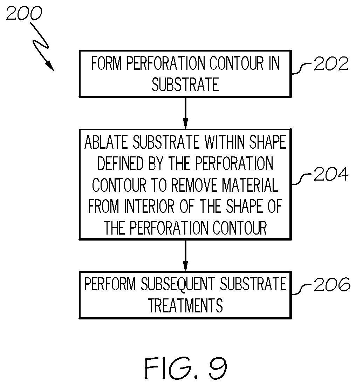

Referring now to FIG. 9, a flowchart 200 of an example method for forming a feature 110 in a substrate 100 is depicted. At block 202, a pulsed laser beam focal line 2b is directed into the substrate 100 at a plurality of locations to form a plurality of perforations that define a perforation contour. The pulsed laser beam focal line 2b generates an induced absorption within the substrate 100 such that the pulsed laser beam focal line produces a perforation extending through at least a portion of a thickness of the substrate at each location of the plurality of locations. The perforation contour defines a perimeter or boundary of a feature.

At block 204, a second laser process step includes directing a focused ablation laser beam 32 into the substrate 100 to ablate at least a portion of the substrate 100 along an ablation track that is offset from the perforation contour by a perforation-ablation offset Δ_{nP-Ablation}. The focused ablation laser beam 32 removes substrate material along the ablation track to form an ablation groove within a shape defined by the perforation contour to fabricate the feature 110. As stated above the perforation-ablation offset Δ_{nP-Ablation} is chosen such that a surface of a sidewall of the feature has a surface roughness Ra of less than or equal to 3 µm or a surface roughness obtained by controlling the parameters of the ablation laser beam to satisfy Equation (2).

At block 206, further substrate treatment steps may or may not be performed. For example, the substrate 100 may be chemically etched by an etching process to further improve the smoothness of the sidewall of the feature 110 as well as the smoothness of other edges of the substrate 100.

In some embodiments, both the first and second surfaces 102 and 104 of the substrate 100 are individually processed. In some cases, processing the substrate 100 from only one of the first and second surfaces 102 and 104 may cause the sidewall of the feature to be tapered such that an opening of the feature on the first surface 102 (i.e., the surface facing the laser beams) may be larger than an opening of the feature on the second surface 104 in embodiments in which the feature is a through feature. The tapered effect may be more pronounced with increasing thickness of the substrate, for example.

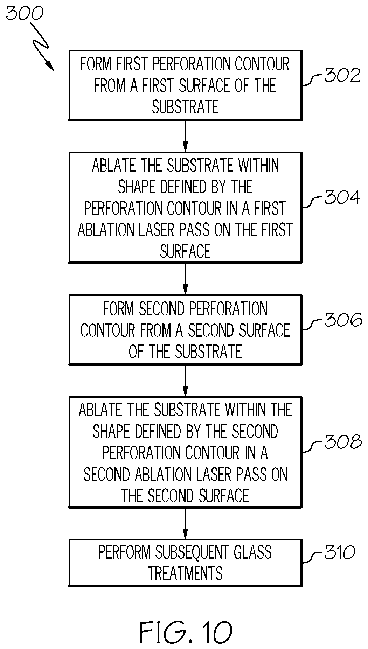

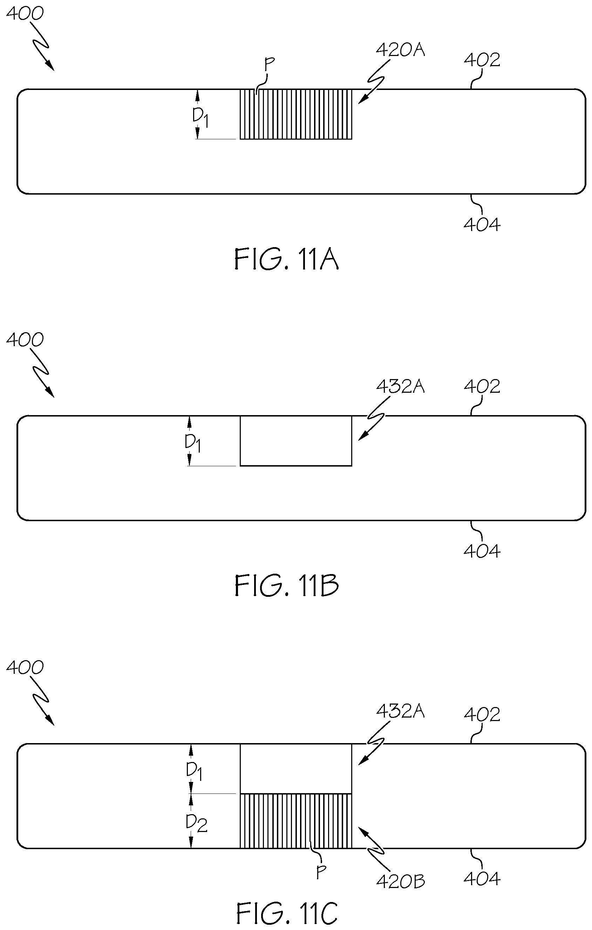

FIG. 10 illustrates a flowchart 300 of an example method for forming a through-feature 110 in a substrate 100 in which each of the first surface 102 and the second surface 104 are individually processed. FIGS. 11A-11D illustrate an example substrate 400 being processed according to the example method of FIG. 10.

At block 302, a pulsed laser beam focal line 2b is directed into a first surface 402 of the substrate 400 at a plurality of first locations. As shown in FIG. 11A, the pulsed laser beam focal line 2b generates an induced absorption within the substrate 400 such that the pulsed laser beam focal line produces a first perforation contour 420A at least partially extending into a thickness of the substrate from the first surface 402. In the example, individual perforations P extend to a depth D₁ which is about halfway into the bulk of the substrate 400. However, it should be understood that in some cases the individual perforations will extend less than or more than halfway into the bulk of the substrate 400. The pulsed laser beam focal line 2b is configured to produce individual perforations P that extend from the first surface 402 and terminate at a depth D₁ within the bulk of the substrate 400.

At block 304, a focused ablation laser beam 32 is directed into a first portion of the substrate 400 from the first surface 402 to ablate the substrate 400 from the first surface 402 along a first ablation track that is offset from the first perforation contour by a perforation-ablation offset Δ_{nP-Ablation}. The focused ablation laser beam 32 is configured such that it partially removes substrate material to the depth D₁ within the thickness of the substrate and within a shape defined by the first perforation contour 420A.

In yet another example, first and second perforation contours are formed on first and second surfaces of the substrate prior to any ablation step. After the first and second perforation contours are formed, ablation grooves are formed on the first surface and the second surface of the substrate.

FIG. 11B illustrates a first ablation groove 432A that is formed from the first surface 402 to approximately the depth D₁. It should be understood that individual perforations P may extend below the first ablation groove 432A in some cases. Further, the depth to which the first ablation groove 432A extends within the bulk of the substrate 400 may be equal to, less than, or greater than the depth of the perforation contour 420A.

Next, at block 306, a second perforation contour 420B is formed on the second surface 404 of the substrate 400 by directing the pulsed laser beam focal line 2b into the second surface 404 of the substrate 400 at a plurality of second locations. The pulsed laser beam focal line 2b generates an induced absorption within the substrate 400 such that the pulsed laser beam focal line 2b produces a second perforation contour 420B that at least partially extends into the thickness of the substrate from the second surface at each location of the plurality of second locations. FIG. 11C illustrates that the individual perforation P of the second perforation contour 420B extend to a depth D₂ such that the individual perforation P reach at least the depth D₁ of the first ablation groove 432A.

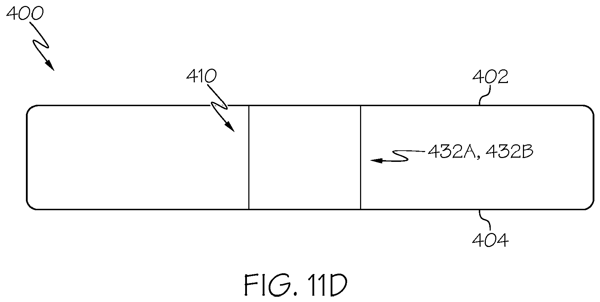

At block 308, the process includes directing the focused ablation laser beam 32 into a second portion of the substrate 400 from the second surface 404 and ablating the substrate 400 from the second surface 404 along a second ablation track that is offset from the second perforation contour 420B by a perforation-ablation offset Δ_{nP-Ablation}. The ablation laser beam 32 removes substrate material to the depth D₂ that reaches the first ablation groove 432A formed from the first surface and within the shape defined by the second perforation contour 420B. The ablation laser beam 32 thus forms a second ablation groove 432B that meets the first ablation groove 432A. The meeting of the first ablation groove 432A and the second ablation groove 432B cause an inner piece to drop out, which thereby forms the through-feature 410 (FIG. 11D). As stated above, the perforation-ablation offset Δ_{nP-Ablation} is preferably chosen such that a surface of a sidewall of the through-feature 410 has a surface roughness Ra of less than or equal to 3 µm or a surface roughness Ra obtained by controlling the parameters of the ablation laser beam 32 to satisfy Equation (2).

At block 310, further substrate treatment steps may or may not be performed. For example, the substrate 400 may be chemically etched by an etching process to further improve the smoothness of the sidewall of the through-feature 410 as well as the smoothness of other edges of the substrate 100.

### COMPARATIVE EXAMPLE 1

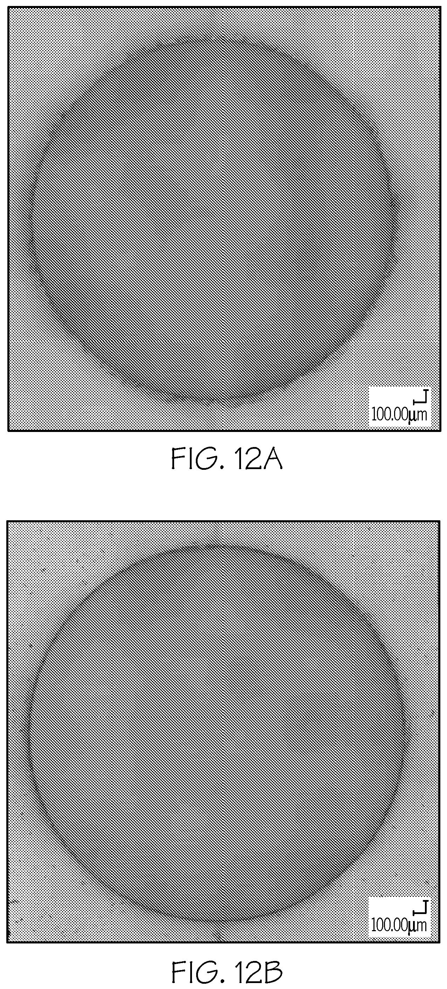

FIG. 12A is a digital photograph of a 3 mm hole that was formed by ablation in a 1 mm thick borosilicate glass substrate without first forming a perforation contour. The digital photograph of FIG. 12A is from the laser entrance surface of the glass substrate. The 3 mm hole was fabricated by a standard nanosecond laser ablation process using a laser having a wavelength of 532 nm, a power of 19 W, a pulse width of 6 ns, and a translation speed of 2 m/s.

An inspection of the hole of FIG. 12A reveals some residual material on the sidewall. Chipping with chip sizes in the range of about 100 µm was observed around almost the entire circumference of the hole. Additionally, the dark ring surrounding the hole is indicative of a tapered, non-straight sidewall.

### EXAMPLE 1

FIG. 12B is a digital photograph of a 3 mm hole that was formed in a borosilicate glass substrate with thickness 1 mm using the example method as provided in FIG. 9 and described above. The glass substrate was the same borosilicate glass substrate as Comparative Example 1. A perforation contour was first formed using a pulsed laser beam focal line having a wavelength of 1064 nm, a power of 50 W, a pulse width of 10 ps, a frequency of 100 kHz and a translation speed of 0.2 m/s. The individual perforations extended through the full thickness of the glass substrate. The perforation-ablation offset Δ_{nP-Ablation} was 0.02 mm.

Next, an ablation groove with a width of 400 µm was formed to create the hole. The ablation laser beam parameters were the same as described above in Comparative Example 1.

An inspection of the hole of FIG. 12B reveals significantly less residual material on the sidewall of the hole than was observed for Comparative Example 1 (FIG. 12A). The hole of FIG. 12B has significantly less chipping than the hole of Comparative Example 1 and appears to be chip-free around a majority of its circumference. Additionally, a smaller black ring around the hole indicates straighter sidewalls (less taper) than the hole of Comparative Example 1.

### EXAMPLE 2

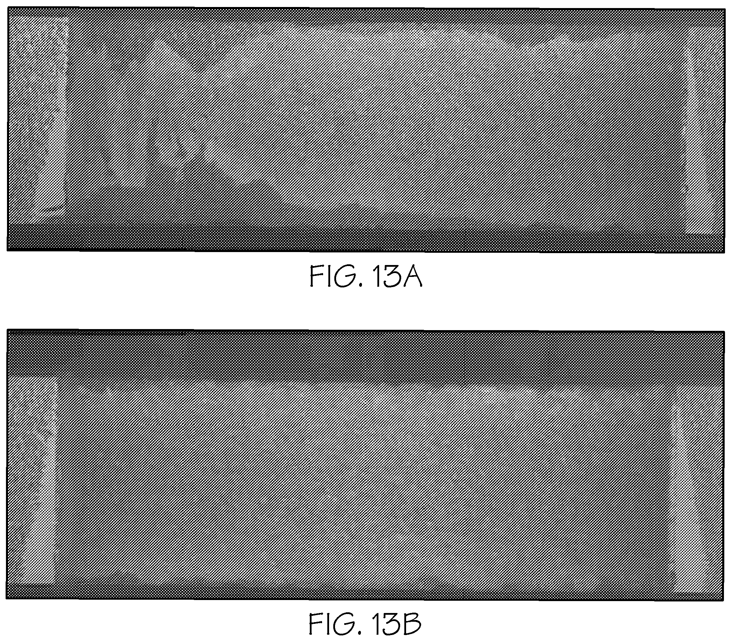

FIG. 13A is digital photograph of cross section of a 3 mm hole that was formed in the borosilicate glass substrate of Example 1 using the same method as used to form the hole shown in FIG. 12B of Example 1, except that the perforation-ablation offset Δ_{P-Ablation} was 0.01 mm instead of 0.02 mm. The image shown in FIG. 13A indicates that the reduction in perforation-ablation offset Δ_{P-Ablation} led to more chipping, larger chip sizes, and a higher surface roughness Ra of the sidewall of the hole.

### EXAMPLE 3

FIG. 13B is a digital photograph of a cross section of the 3 mm hole that was formed in a borosilicate glass substrate using the same method as used to form the hole shown in FIG. 12B of Example 1. The perforation-ablation offset Δ_{nP-Ablation} was 0.02 mm and satisfied Eq. (2). Comparing Example 3 to Example 2, it can be observed that the sidewall of the hole of Example 3 has less material on it than the sidewall of Example 2, thereby resulting in a smoother sidewall with lower surface roughness Ra.

### COMPARATIVE EXAMPLE 2

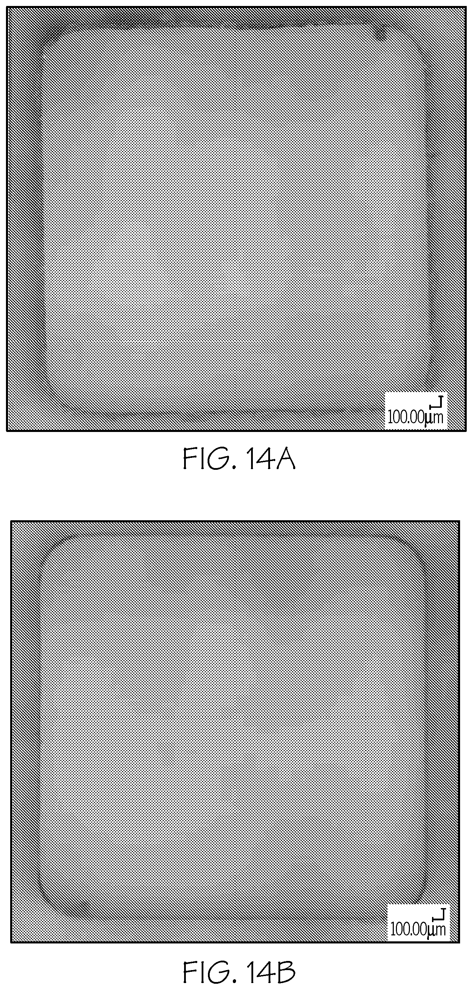

Through-features and blind features other than features having a circular cross-section may be fabricated using the hybrid method described herein. FIG. 14A illustrates a square through-feature with dimensions of 3.6 mm by 3.6 mm formed into a 2 mm thick Corning Code 2318 alkali-aluminosilicate glass using the same laser ablation process as Comparative Example 1. There is significant chipping around the sidewall of the through-feature, resulting in a rough, low-quality edge.

### EXAMPLE 4

FIG. 14B illustrates a square feature having the same dimensions and in the same glass as Comparative Example 2, but fabricated with the two-step laser process used to form the hole of FIG. 12B of Example 1. As shown by FIG. 14B, the sidewall of the through-feature of Example 4 has much less chipping and is much smoother than the sidewall of FIG. 14A.

It should now be understood that embodiments described herein provide methods for forming features in a substrate that have sidewalls with low surface roughness (e.g., a surface roughness Ra of less than 3 µm), small diameters (e.g., less than 5 mm), limited chipping and small chip sizes (< 100 µm, or < 75 µm, or < 50 µm). The methods described herein utilize a first laser process wherein individual perforations are formed within the bulk of the substrate by non-linear absorption to define a perforation contour that defines a shape of a feature. Next, an ablation groove is formed within the interior of the shape defined by the perforation contour by a second laser process to remove an inner piece of the substrate and form the feature. The ablation laser that creates the ablation groove follows an ablation track that is offset from the perforation contour by a perforation-ablation offset Δ_{nP-Ablation} such that the surface roughness Ra of the sidewall of the feature is less than 3 µm.

It is noted that recitations herein of a component of the embodiments being "configured" in a particular way, "configured" to embody a particular property, or function in a particular manner, are structural recitations as opposed to recitations of intended use. More specifically, the references herein to the manner in which a component is "configured" denotes an existing physical condition of the component and, as such, is to be taken as a definite recitation of the structural characteristics of the component.

It is noted that one or more of the following claims utilize the term "wherein" as a transitional phrase. For the purposes of defining the embodiments of the present disclosure, it is noted that this term is introduced in the claims as an open-ended transitional phrase that is used to introduce a recitation of a series of characteristics of the structure and should be interpreted in like manner as the more commonly used open-ended preamble term "comprising."

Although the disclosure has been illustrated and described herein with reference to explanatory embodiments and specific examples thereof, it will be readily apparent to those of ordinary skill in the art that other embodiments and examples can perform similar functions and/or achieve like results.

## Claims

1. A method of forming a feature (110) in a substrate (100, 400), the method comprising:
forming a perforation contour (120) comprising a plurality of perforations by directing a pulsed laser beam focal line (2b) into the substrate (100, 400) at a plurality of locations, the pulsed laser beam focal line (2b) generating an induced absorption within the substrate (100, 400) at each of the locations, the induced absorption producing one of the plurality of perforations; and
directing an ablation laser beam (32) into the substrate (100, 400) along an ablation track (130) offset from the perforation contour (120), the ablation laser beam (32) ablating the substrate (100, 400) along the ablation track (130);
**characterised in that**
the ablation track (130) is offset from the perforation contour (120) by a spacing in a range from 5 µm to 25 µm.

2. The method of claim 1, wherein the substrate (100, 400) is glass.

3. The method of claim 1 or 2,
wherein the pulsed laser beam focal line (2b) is formed from a quasi-non-diffracting beam;
in particular wherein the quasi-non-diffracting beam is a Bessel beam or a Gauss-Bessel beam.

4. The method of any of claims 1-3,
wherein the perforations have a length that is less than a thickness of the substrate (100, 400); and/or
wherein the perforation contour (120) is closed; and/or
wherein the perforation contour (120) circumscribes the ablation track (130).

5. The method of any of claims 1-4, wherein the substrate (100, 400) has a surface of incidence through which the pulsed laser beam focal line (2b) enters the substrate (100, 400) and the ablation laser beam (32) is focused to a beam spot BS within the substrate (100, 400), the position of the beam spot BS being less than 50% of a thickness of the substrate (100, 400) from a surface of the substrate (100, 400) opposite the surface of incidence.

6. The method of any of claims 1-5, wherein the ablation laser beam (32) is focused to a beam spot BS with an ablation diameter d_{Ablation Spot} in a range from 10 µm to 50 µm.

7. The method of claim 6, wherein the beam spot BS overlaps the perforation contour (120).

8. The method of claim 6 or 7, wherein the ablation laser beam (32) forms an ablation groove along the ablation track (130), the ablation groove not overlapping the perforation contour (120).

9. The method of any of claims 1-8, wherein the ablation laser beam (32) forms an ablation groove along the ablation track (130), the ablation groove having a width w_{Ablation} in a range from 10 µm to less than 50 µm;
in particular wherein the ablation groove is spaced apart from the perforation contour (120).

10. The method of any of claims 1-9, wherein the feature (110) is a through-feature.

11. The method of any of claims 1-10, wherein the feature (110) comprises a sidewall, the sidewall having a roughness Ra less 3 µm.

12. The method of any of claims 1-11,
wherein the feature (110) comprises a sidewall, the sidewall lacking chips having a size greater than 100 µm; and/or
wherein the feature (110) comprises a sidewall, the sidewall having chips with an average size less than 50 µm.

13. The method of any of claims 1-12, wherein the feature (110) comprises a sidewall and the ablation laser beam (32) does not ablate the sidewall.

14. The method of any of claims 1-13, wherein the feature (110) has a feature size less than 3.0 mm.

15. A substrate (100, 400), the substrate (100, 400) comprising:
a perforation contour (120) comprising a plurality of perforations generated by directing a pulsed laser beam focal line (2b) into the substrate (100, 400) at a plurality of locations, the pulsed laser beam focal line (2b) generating an induced absorption within the substrate (100, 400) at each of the locations, the induced absorption producing one of the plurality of perforations; and
an ablation track (130) along which an ablation laser beam (32), ablating the substrate (100, 400) along the ablation track (130), was directed into the substrate (100, 400);
**characterised in that**
the ablation track (130) is offset from the perforation contour (120) by a spacing in a range from 5 µm to 25 µm.

## Patentansprüche

1. Ein Verfahren zum Bilden eines Merkmals (110) in einem Substrat (100, 400), wobei das Verfahren aufweist:
Bilden einer Perforationskontur (120), die eine Mehrzahl von Perforationen aufweist, durch Richten einer gepulsten Laserstrahlbrennlinie (2b) in das Substrat (100, 400) an einer Mehrzahl von Stellen, wobei die gepulste Laserstrahlbrennlinie (2b) eine induzierte Absorption innerhalb des Substrats (100, 400) an jeder der Stellen erzeugt, wobei die induzierte Absorption eine der Mehrzahl von Perforationen erzeugt; und
Richten eines Ablationslaserstrahls (32) in das Substrat (100, 400) entlang einer Ablationsspur (130), die von der Perforationskontur (120) versetzt ist, wobei der Ablationslaserstrahl (32) das Substrat (100, 400) entlang der Ablationsspur (130) ablatiert;
**dadurch gekennzeichnet, dass**
die Ablationsspur (130) von der Perforationskontur (120) um einen Abstand in einem Bereich von 5 µm bis 25 µm versetzt ist.

2. Das Verfahren gemäß Anspruch 1, wobei das Substrat (100, 400) Glas ist.

3. Das Verfahren gemäß Anspruch 1 oder 2,
wobei die gepulste Laserstrahlbrennlinie (2b) aus einem quasi-nichtbeugenden Strahl gebildet wird;
insbesondere wobei der quasi-nicht-beugende Strahl ein Bessel-Strahl oder ein Gauß-Bessel-Strahl ist.

4. Das Verfahren gemäß einem der Ansprüche 1-3,
wobei die Perforationen eine Länge haben, die kleiner ist als eine Dicke des Substrats (100, 400); und/oder
wobei die Perforationskontur (120) geschlossen ist; und/oder
wobei die Perforationskontur (120) die Ablationsspur (130) umschreibt.

5. Das Verfahren gemäß einem der Ansprüche 1-4, wobei das Substrat (100, 400) eine Einfallsfläche hat, durch die die gepulste Laserstrahlbrennlinie (2b) in das Substrat (100, 400) eintritt und der Ablationslaserstrahl (32) auf einen Strahlpunkt BS innerhalb des Substrats (100, 400) fokussiert wird, wobei die Position des Strahlpunkts BS weniger als 50% einer Dicke des Substrats (100, 400) von einer Fläche des Substrats (100, 400) gegenüber der Einfallsfläche ist.

6. Das Verfahren gemäß einem der Ansprüche 1-5, wobei der Ablationslaserstrahl (32) auf einen Strahlpunkt BS mit einem Ablationsdurchmesser d_{Ablationspunkt} in einem Bereich von 10 µm bis 50 µm fokussiert wird.

7. Das Verfahren gemäß Anspruch 6, wobei der Strahlpunkt BS die Perforationskontur (120) überlappt.

8. Das Verfahren gemäß Anspruch 6 oder 7, wobei der Ablationslaserstrahl (32) eine Ablationsrille entlang der Ablationsspur (130) bildet, wobei die Ablationsrille die Perforationskontur (120) nicht überlappt.

9. Das Verfahren gemäß einem der Ansprüche 1-8, wobei der Ablationslaserstrahl (32) eine Ablationsrille entlang der Ablationsspur (130) bildet, wobei die Ablationsrille eine Breite w_{Ablation} in einem Bereich von 10 µm bis weniger als 50 µm aufweist;
insbesondere wobei die Ablationsrille von der Perforationskontur (120) beabstandet ist.

10. Das Verfahren gemäß einem der Ansprüche 1-9, wobei das Merkmal (110) ein durchgehendes Merkmal ist.

11. Das Verfahren gemäß einem der Ansprüche 1-10, wobei das Merkmal (110) eine Seitenwand aufweist, wobei die Seitenwand eine Rauheit Ra von weniger als 3 µm aufweist.

12. Das Verfahren gemäß einem der Ansprüche 1-11,
wobei das Merkmal (110) eine Seitenwand aufweist, wobei der Seitenwand Chips mit einer Größe von mehr als 100 µm fehlen; und/oder
wobei das Merkmal (110) eine Seitenwand aufweist, wobei die Seitenwand Chips mit einer durchschnittlichen Größe von weniger als 50 µm aufweist.

13. Das Verfahren gemäß einem der Ansprüche 1-12, wobei das Merkmal (110) eine Seitenwand aufweist und der Ablationslaserstrahl (32) die Seitenwand nicht ablatiert.

14. Das Verfahren gemäß einem der Ansprüche 1-13, wobei das Merkmal (110) eine Merkmalsgröße von weniger als 3,0 mm hat.

15. Ein Substrat (100, 400), wobei das Substrat (100, 400) aufweist:
eine Perforationskontur (120), die eine Mehrzahl von Perforationen aufweist, die durch Richten einer gepulsten Laserstrahlbrennlinie (2b) in das Substrat (100, 400) an einer Mehrzahl von Stellen erzeugt werden, wobei die gepulste Laserstrahlbrennlinie (2b) eine induzierte Absorption innerhalb des Substrats (100, 400) an jeder der Stellen erzeugt, wobei die induzierte Absorption eine der Mehrzahl von Perforationen erzeugt; und
eine Ablationsspur (130), entlang der ein Ablationslaserstrahl (32), der das Substrat (100, 400) entlang der Ablationsspur (130) ablatiert, in das Substrat (100, 400) gerichtet wurde;
**dadurch gekennzeichnet, dass**
die Ablationsspur (130) von der Perforationskontur (120) um einen Abstand in einem Bereich von 5 µm bis 25 µm versetzt ist.

## Revendications

1. Procédé de formation d'une caractéristique (110) dans un substrat (100, 400), le procédé comprenant les étapes consistant à :
former un contour de perforations (120) comprenant une pluralité de perforations en dirigeant une ligne focale de faisceau laser pulsé (2b) dans le substrat (100, 400) à une pluralité d'emplacements, la ligne focale de faisceau laser pulsé (2b) générant une absorption induite à l'intérieur du substrat (100, 400) au niveau de chacun des emplacements, l'absorption induite produisant une certaine pluralité de perforations ; et
diriger un faisceau laser d'ablation (32) dans le substrat (100, 400) le long d'une piste d'ablation (130) décalée par rapport au contour de perforations (120), le faisceau laser d'ablation (32) ablatant le substrat (100, 400) le long de la piste d'ablation (130) ;
**caractérisé en ce que**
la piste d'ablation (130) est décalée du contour de perforations (120) d'un espacement dans une plage de 5 µm à 25 µm.

2. Procédé selon la revendication 1, dans lequel le substrat (100, 400) est du verre.

3. Procédé selon la revendication 1 ou 2,
dans lequel la ligne focale de faisceau laser pulsé (2b) est formée à partir d'un faisceau quasi-non-diffractif ;
en particulier dans lequel le faisceau quasi-non-diffractif est un faisceau de Bessel ou un faisceau de Gauss-Bessel.

4. Procédé selon l'une quelconque des revendications 1 à 3,
dans lequel les perforations présentent une longueur qui est inférieure à une épaisseur du substrat (100, 400) ; et/ou
dans lequel le contour de perforations (120) est fermé ; et/ou
dans lequel le contour de perforations (120) entoure la piste d'ablation (130).

5. Procédé selon l'une quelconque des revendications 1 à 4, dans lequel le substrat (100, 400) présente une surface d'incidence à travers laquelle la ligne focale de faisceau laser pulsé (2b) pénètre dans le substrat (100, 400) et le faisceau laser d'ablation (32) est focalisé sur un point de faisceau BS à l'intérieur du substrat (100, 400), la position du point de faisceau BS étant inférieure à 50 % d'une épaisseur du substrat (100, 400) à partir d'une surface du substrat (100, 400) opposée à la surface d'incidence.

6. Procédé selon l'une quelconque des revendications 1 à 5, dans lequel le faisceau laser d'ablation (32) est focalisé sur un point de faisceau BS avec un diamètre d'ablation d_{Ablation Spot} dans une plage de 10 µm à 50 µm.

7. Procédé selon la revendication 6, dans lequel le point de faisceau BS chevauche le contour de perforations (120).

8. Procédé selon la revendication 6 ou 7, dans lequel le faisceau laser d'ablation (32) forme une rainure d'ablation le long de la piste d'ablation (130), la rainure d'ablation ne chevauchant pas le contour de perforations (120).

9. Procédé selon l'une quelconque des revendications 1 à 8, dans lequel le faisceau laser d'ablation (32) forme une rainure d'ablation le long de la piste d'ablation (130), la rainure d'ablation présentant une largeur w_{Ablation} dans une plage de 10 µm à moins de 50 µm ;
en particulier dans lequel la rainure d'ablation est espacée du contour de perforations (120).

10. Procédé selon l'une quelconque des revendications 1 à 9, dans lequel la caractéristique (110) est une caractéristique traversante.

11. Procédé selon l'une quelconque des revendications 1 à 10, dans lequel la caractéristique (110) comprend une paroi latérale, la paroi latérale présentant une rugosité Ra inférieure à 3 µm.

12. Procédé selon l'une quelconque des revendications 1 à 11,
dans lequel la caractéristique (110) comprend une paroi latérale, la paroi latérale étant dépourvue de puces présentant une taille supérieure à 100 µm ; et/ou
dans lequel la caractéristique (110) comprend une paroi latérale, la paroi latérale présentant des puces avec une taille moyenne inférieure à 50 µm.

13. Procédé selon l'une quelconque des revendications 1 à 12, dans lequel la caractéristique (110) comprend une paroi latérale et le faisceau laser d'ablation (32) n'ablate pas la paroi latérale.

14. Procédé selon l'une quelconque des revendications 1 à 13, dans lequel la caractéristique (110) présente une taille de caractéristique inférieure à 3,0 mm.

15. Substrat (100, 400), le substrat (100, 400) comprenant :
un contour de perforations (120) comprenant une pluralité de perforations générée en dirigeant une ligne focale de faisceau laser pulsé (2b) dans le substrat (100, 400) à une pluralité d'emplacements, la ligne focale de faisceau laser pulsé (2b) générant une absorption induite à l'intérieur du substrat (100, 400) au niveau de chacun des emplacements, l'absorption induite produisant une certaine pluralité de perforations ; et
une piste d'ablation (130) le long de laquelle un faisceau laser d'ablation (32), ablatant le substrat (100, 400) le long de la piste d'ablation (130), a été dirigé dans le substrat (100, 400) ;
**caractérisé en ce que**
la piste d'ablation (130) est décalée du contour de perforations (120) d'un espacement dans une plage de 5 µm à 25 µm.
